(19) Europäisches Patentamt
European Patent Office
Office européen des brevets

(11) **EP 4 152 200 B1**

(12) **EUROPEAN PATENT SPECIFICATION**

(45) Date of publication and mention of the grant of the patent:
**18.03.2026 Bulletin 2026/12**

(21) Application number: **22150590.2**

(22) Date of filing: **07.01.2022**

(51) International Patent Classification (IPC):
*G06F 30/23* (2020.01)     *G01H 17/00* (2006.01)
*G06F 119/10* (2020.01)    *G06F 119/14* (2020.01)

(52) Cooperative Patent Classification (CPC):
**G06F 30/23; G01H 17/00;** G06F 2119/10;
G06F 2119/14

(54) **METHOD TO QUANTIFY TRANSIENT FORCE AND MOMENT**

VERFAHREN ZUR QUANTIFIZIERUNG VON TRANSIENTEN KRÄFTEN UND MOMENTEN

PROCÉDÉ POUR QUANTIFIER LA FORCE ET LE MOMENT TRANSITOIRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.09.2021 US 202117477270**

(43) Date of publication of application:
**22.03.2023 Bulletin 2023/12**

(73) Proprietor: **Hitachi, Ltd.**
**Chiyoda-ku,**
**Tokyo 100-8280 (JP)**

(72) Inventor: **INOUE, Akira**
**Santa Clara, CA 95054 (US)**

(74) Representative: **Mewburn Ellis LLP**
**Aurora Building**
**Counterslip**
**Bristol BS1 6BX (GB)**

(56) References cited:
• SIEMENS: "Transfer path analysis Qualifying and quantifying vibro-acoustic transfer paths", 1 September 2018 (2018-09-01), XP055934527, Retrieved from the Internet <URL:https://www.plm.automation.siemens.com/media/global/de/Siemens-PLM-Transfer-Path-Analysis-wp_tcm53-46584.pdf> [retrieved on 20220622]
• GEELEN THOM N J: "Time Domain Force Identification for Noise and Vibration Prediction in Vehicles", 3 July 2019 (2019-07-03), XP055934528, Retrieved from the Internet <URL:https://repository.tudelft.nl/islandora/object/uuid%3A1409d678-1f93-4f98-af84-7e8a1a0d4b44> [retrieved on 20220622]
• SIEMENS: "Siemens PLM Software Advanced transfer path analysis techniques", 1 August 2018 (2018-08-01), XP055934531, Retrieved from the Internet <URL:http://www.dgt-factory.com/uploads/2018/08/0820/Advanced%20Transfer%20Path%20Analysis%20Techniques.pdf> [retrieved on 20220622]

## Description

## BACKGROUND

Field

The present disclosure is generally directed to transfer path analysis (TPA), and more specifically, to systems and method for computing force and/or moment in the time domain (e.g., for transient states) for structures with generic (e.g., non-proportional) viscous-type damping.

Related Art

TPA is a method to quantify the contribution of each air-borne and structure-borne path to the sound and or vibration at a point. In some aspects of TPA, interfacial force and/or moment must be determined to quantify structure-borne paths of sound and/or vibration. The structure-borne paths may include a set of transfer paths identified as dominant transfer paths (e.g., for sound and/or vibration) by the TPA. The identified dominant transfer paths may be used to determine how to effectively reduce and/or control sound and/or vibration at a particular point in a system. In addition, the determined interfacial force and/or moment may be used to perform power flow analysis which calculates a mechanical power dissipation.

In some aspects, it is technically difficult to directly measure force (or moment), e.g., because a force sensor has to be installed in series to the structure. While there exist well-known indirect methods to compute force in the steady state or frequency domain, there exist only few and very restricted methods to indirectly compute force (or moment) in the transient state or time domain. However, none of these existing methods support a true-transient TPA based on an interfacial force and moment computation in the time domain. For example, other existing methods may only be capable of calculating interfacial force and/or moment in the frequency domain or may only calculate interfacial force and/or moment for a proportionally damped structure.

## SUMMARY

Example implementations described herein involve an innovative method to compute interfacial vibratory forces and moments applied to a structure (or substructure) in the time domain (without directly measuring force or moment), by using other quantities, such as acceleration, material properties, and modal properties. The structure may be proportionally or non-proportionally (locally) damped. Example implementations described herein can be incorporated into physical systems to computes multiple interfacial forces and moments applied to the structure (or substructure). The system may be used to compare parallel vibration transmission paths in the time domain.

Aspects of the present disclosure include a method for computation of force and moment in a time domain for a physical system according to claim 1.

Aspects of the present disclosure include a non-transitory computer readable medium, storing instructions for execution by a processor, according to claim 7.

Aspects of the present disclosure include an apparatus, according to claim 10.

The white paper by Siemens: "Transfer path analysis Qualifying and quantifying vibro-acoustic transfer paths", 1 September 2018 (2018-09-01), XP055934527, discloses an alternative method for performing TPA.

## BRIEF DESCRIPTION OF DRAWINGS

FIG. 1 is an example of two views of a discretized structure.

FIG. 2 is a set of diagrams illustrating examples of discretized structures each with a set of sensors.

FIG. 3 is a set of diagrams that illustrate a set of displacements (linear and angular) for an example sensor.

FIG. 4 illustrates an example flow diagram for the method.

FIG. 5 illustrates sets of related operations performed by the system or as part of the method.

FIG. 6 conceptually illustrates a system including a set of components that may perform the method of FIG. 4.

FIG. 7 is a diagram of multiple consecutive measurement time intervals for which the operations of FIGs. 4-6 may be performed to perform online monitoring of forces and moments.

FIG. 8 illustrates an example computing environment with an example computer device suitable for use in some example implementations.

**DETAILED DESCRIPTION**

The following detailed description provides details of the figures and example implementations of the present application. Reference numerals and descriptions of redundant elements between figures are omitted for clarity. Terms used throughout the description are provided as examples and are not intended to be limiting. For example, the use of the term "automatic" may involve fully automatic or semi-automatic implementations involving user or administrator control over certain aspects of the implementation, depending on the desired implementation of one of the ordinary skills in the art practicing implementations of the present application. Selection can be conducted by a user through a user interface or other input means, or can be implemented through a desired algorithm. Example implementations as described herein can be utilized either singularly or in combination and the functionality of the example implementations can be implemented through any means according to the desired implementations.

Example implementations described herein involve an innovative method to compute interfacial vibratory forces and moments applied to a structure (or substructure) in the time domain (without directly measuring force or moment), by using other quantities, such as acceleration, material properties, and modal properties. The structure may be proportionally or non-proportionally (locally) damped. Example implementations described herein can be incorporated into physical systems to computes multiple interfacial forces and moments applied to the structure (or substructure). The system may be used to compare parallel vibration transmission paths in the time domain. For example, the structure may be an automotive suspension or engine (e.g., the surface of the suspension/engine that contacts an engine mount and through which energy may be transmitted to an automotive interior). Similarly, the structures discussed below may be any other similar structure at an interface between elements through which energy may be transferred.

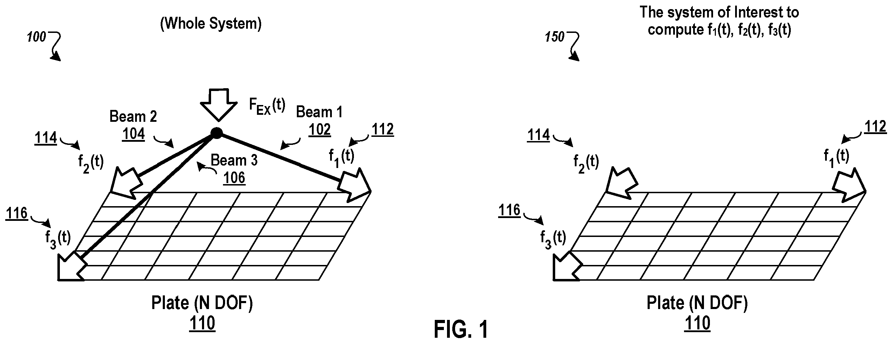

FIG. 1 is an example of two views 100 and 150 of a discretized structure. The discretized structure may include one plate 110 and three beams (e.g., beam 1 (102), beam 2 (104), and beam 3 (106)). In this example, the force and moment from each beam to the plate (e.g., $f_1(t)$ 112, $f_2(t)$ 114, and $f_3(t)$ 116) may be computed by the method, non-transitory computer readable medium, system, or apparatus. In some aspects, the method, non-transitory computer readable medium, system, or apparatus for calculating force and moment in the time domain can compute force and moment at any node (point) in this system.

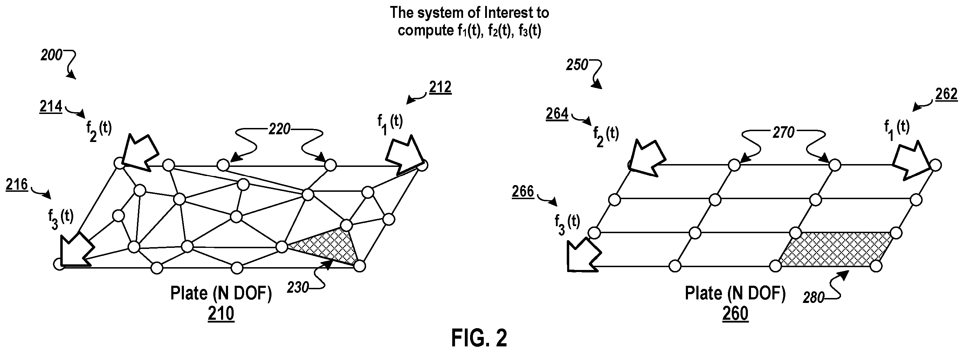

FIG. 2 is a set of diagrams 200 and 250 illustrating examples of discretized structures (e.g., plates 210 and 260) each with a set of sensors 220 and 270, respectively. The set of sensors 220 associated with structure 210 may be distributed across the structure 210 non-uniformly at a set of defined discretized points. The set of sensors 220 may measure a response to forces $f_1(t)$ 212, $f_2(t)$ 214, and $f_3(t)$ 216.

As illustrated in relation to structure 260, in some aspects, the sensors 270 may be uniformly distributed across the structure 260. The sensors may be capable of determining a displacement from an initial position (e.g., a position prior to any forces, sounds, and/or vibrations being applied to the structure or system). The sensors, in some aspects, may be accelerometers at a set of defined discretized points (nodes). The set of sensors 270 may measure a response to forces $f_1(t)$ 262, $f_2(t)$ 264, and $f_3(t)$ 266.

The system may obtain material properties and modal properties of the physical system (e.g., plate 110 of FIG. 1; plate 210 or 260 of FIG. 2). The material properties may include one of (1) a mass, M, associated with the nodes of the physical system and a set of stiffness coefficients (or values), K, associated with pairs of nodes of the physical system and/or (2) the mass, M, associated with the nodes of the physical system and a set of damping coefficients (or values), C, associated with the physical system. In some aspects, each of the material properties may be defined as an *NxN* matrix. The material properties may be used to generate a matrix used in subsequent computations/calculations. For example, a 2*N*x2*N* matrix $A = \begin{bmatrix} C & M \\ M & 0 \end{bmatrix}$ or $B = \begin{bmatrix} K & 0 \\ 0 & -M \end{bmatrix}$ may be generated based on the material properties.

The modal properties may include a set of mode shapes $\phi_i$ and natural frequencies $\lambda_i$ with i = 1, ..., N, where N is the number of DOF in the system. The modal properties may be used to obtain a set of quantities $\lambda_r, \phi_r$ with r = 1, ..., 2N and for r = i = 1, ..., N, $\lambda_r = \lambda_i$ and $\phi_r = \phi_i$. The mode shapes $\phi_r$ and natural frequencies $\lambda_r$, in some aspects, are complex-valued eigensolutions for non-proportionally damped systems in general. When the complex-valued eigensolutions, $\phi_i$ and $\lambda_i$, are obtained, a complex conjugate is also obtained, and for r = N + 1, ..., 2N, $\lambda_r$ and $\phi_r$ are the complex conjugates of $\lambda_i$ and $\phi_i$ (for i = 1, ..., N), respectively. When the complex-valued eigensolutions, $\phi_i$ and $\lambda_i$ are not (or cannot be) obtained, for r = N + 1, ..., 2N, $\lambda_r$ and $\phi_r$ may be approximated by $\lambda_i$ and $\phi_i$ (for i = 1, ..., N). In some aspects, a computer-aided engineering (CAE) model may be used to compute complex-valued eigensolutions $\lambda_r$ and $\phi_r$.

The one or more sensors may measure a displacement $q_i(t)$, velocity $\dot{q}_i(t)$, or acceleration $\ddot{q}_i(t)$, where i = (1, ..., N) and the dot notation (e.g., $\dot{q}_i$) indicates a derivative with respect to time. If the one or more sensors measure something other than the (transient) displacement, the measured value may be used to obtain the transient displacement values, $q_i(t)$. For example, for a measured velocity, $\dot{q}_i(t)$, (or acceleration, $\ddot{q}_i(t)$) the transient displacement may be obtained based on initial conditions, $q_i(0)$, and the equation(s) $\dot{q}_i(t) = \lambda_i q_i(t)$ (and $\ddot{q}_i(t) = \lambda_i \dot{q}_i(t)$). The displacement $q_i(t)$ may be a vector quantity including a set of linear displacement values (corresponding to a set of orthogonal vectors, e.g., $\hat{x}, \hat{y}, \hat{z}$) and a set of angular displacement values (corresponding to a set of rotations about the set of orthogonal vectors, e.g., $\theta_x, \theta_y, \theta_z$). Similarly, a force $f_i(t)$ may be a vector quantity including a set of force values (corresponding to forces along the set of orthogonal vectors, e.g., $f_x$, $f_y$, $f_z$) and a set of moment values (corresponding to the set of rotations about the set of orthogonal vectors, e.g., $\tau_x, \tau_y, \tau_z$). Displacement and force vectors may be defined for the whole system (e.g. plates 110, 210, or 260). For example, the vectors $q(t) = (q_1(t), ..., q_N(t))^T$ and $f(t) = (f_1(t), f_2(t), f_3(t), 0, ..., 0)^T$ may be defined in FIG. 1, where $X^T$ is a transpose operation on a matrix X and $f_j(t) = (f_{jx}, f_{jy}, f_{jz}, \tau_{jx}, \tau_{jy}, \tau_{jz})$ for j = 1, 2, 3.

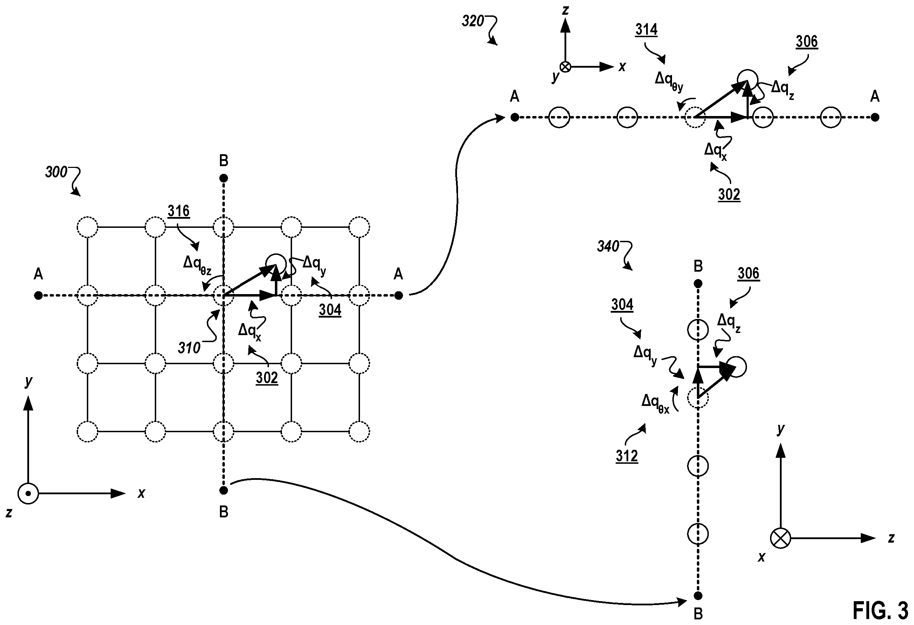

FIG. 3 is a set of diagrams 300, 320, and 340 that illustrate a set of displacements (linear and angular) for an example sensor 310. Diagram 300 illustrates a plan view of a structure (e.g., plate 110 of FIG. 1) with one example sensor 310 that has been displaced from an initial position. Diagram 320 illustrates a view of the structure along line AA in the x- z plane, and diagram 340 illustrates a view of the structure along line BB in the y- z plane. Sensor 310 is illustrated as being displaced a first distance $\Delta q_x$ 302 in a first direction, x, being displaced a second distance $\Delta q_y$ 304 in a second direction, y, and being displaced a third distance $\Delta q_z$ 306 in a third direction, z. Sensor 310 is also illustrated as being rotated through a first angle $\Delta q_{\theta z}$ 316 around a first axis, the z-axis, being rotated through a second angle $\Delta q_{\theta y}$ 314 around a second axis, the y-axis, and being rotated through a third angle $\Delta q_{\theta x}$ 312 around a third axis, the x-axis. In practice, the displacements and rotations in diagrams 300, 320, and 340 may be significantly smaller in magnitude, but are illustrated as relatively large displacement/rotations for ease of view. Each sensor associated with the structure (e.g., sensors 220 of structure 210 or sensors 270 of structure 260 of FIG. 2) may experience similar or different (e.g., independent) displacements and rotations that can be measured at a set of specified times to obtain q(t).

An equation of motion relating the material properties and displacement vector to the force vector may be written as:

$$M\ddot{q}(t) + C\dot{q}(t) + Kq(t) = f(t) \qquad\qquad (\text{Eq. 1})$$

where the matrix size is NxN. Additionally, in some aspects, the times, t, take a set of discrete values, e.g., t = [$t_1$, ..., $t_e$]. The discrete times may be separated by a constant, e.g., h, or the separation between times may be variable. The equation of motion may be expressed in a state-space form:

$$A\dot{Q}(t) + BQ(t) = F(t) \qquad\qquad (\text{Eq. 2})$$

with A and B based on the material properties as discussed above (e.g., $A = \begin{bmatrix} C & M \\ M & 0 \end{bmatrix}$ and $B = \begin{bmatrix} K & 0 \\ 0 & -M \end{bmatrix}$), $Q(t) = \begin{pmatrix} q(t) \\ \dot{q}(t) \end{pmatrix}$, and $F(t) = \begin{pmatrix} f(t) \\ 0 \end{pmatrix}$. Assuming solutions in the form:

$$q_i(t) = q_i e^{\lambda_i t}, i = (1, ..., N) \qquad\qquad (\text{Eq. 3})$$

we will have

$$\dot{q}_i(t) = \lambda_i q_i, i = (1, ..., N) \qquad\qquad (\text{Eq. 4})$$

$$\ddot{q}_i(t) = \lambda_i \dot{q}_i, i = (1, ..., N) \qquad\qquad (\text{Eq. 5})$$

where the set of $\lambda_i$ for i = (1, ..., N) is the set of natural frequencies as described above. Specifically, the set of generalized eigenvectors $\Phi$ uncouples the state space equation (Eq. 2), and diagonalizes A and B such that $\Phi^T A\Phi = \begin{bmatrix} \ddots & ... & 0 \\ \vdots & a_r & \vdots \\ 0 & ... & \ddots \end{bmatrix} = diag[a_r]$ and $\Phi^T B\Phi = \begin{bmatrix} \ddots & ... & 0 \\ \vdots & b_r & \vdots \\ 0 & ... & \ddots \end{bmatrix} = diag[b_r]$. The set of generalized eigenvectors Φ may be defined as $\Phi = (\Phi_1, ..., \Phi_{2N})$, with $\Phi_r = \begin{pmatrix} \phi_r \\ \lambda_r \phi_r \end{pmatrix}_{2N \times 1}$, such that $\lambda_r a_r + b_r = 0$ for r = 1, ..., 2N.

Using these definitions, $\phi_r$ is an Nx1 matrix (or vector), while each $\Phi_r$ is a 2Nx1 matrix (or vector), and Φ is a 2Nx2N matrix.

The uncoupled state-space equation may be expressed as:

$$\dot{H}_r(t) - \lambda_r H_r(t) = \frac{N_r(t)}{a_r}, r = (1, ..., 2N) \tag{Eq. 6}$$

This first order differential equation may be solved as:

$$H_r(t) = \frac{1}{a_r} \int N_r(t - T) e^{\lambda_r} dT \tag{Eq. 7}$$

Where $H_r(t)$ is a component of a first intermediate matrix $H(t)$ used in the method of computing the force and moment. Accordingly, using the computed and/or obtained $Q(t) = \begin{pmatrix} q(t) \\ \dot{q}(t) \end{pmatrix}$ and $\Phi = (\Phi_1, ..., \Phi_{2N})$, (based on the measured values of $q(t)$, $\dot{q}(t)$, or $\ddot{q}(t)$ and $\phi_r$ and $\lambda_r$, respectively), $H(t) = (H_1(t), ..., H_{2N}(t))$ may be calculated using the following formula:

$$H(t) = \Phi^{-1} Q(t) \tag{Eq. 8}$$

Having obtained, $H_r(t)$, $a_r$, and $\lambda_r$, a second intermediate matrix component (e.g., a vector) $N_r(t)$ for t = $t_1$, ..., $t_e$, may be computed by a recursion algorithm used by the method, non-transitory computer readable medium, system, or apparatus.

$N_r(t)$ may be computed from known $H_r(t)$, $a_r$, and $\lambda_r$ for a set of "e" evenly distributed times (e.g., separated by a same time h), e.g., t = 0, h, ..., (e - 1)h based on the following set of recursion algorithms:

$$N_r(0) = 0; \text{ and} \tag{Eq. 9}$$

$$N_r((i - 1)h) = 2(a_r H_r((i - 1)h)/h - \sum_{j=1}^{i-2} N_r(jh) e^{(i-1-j)h\lambda_r}) \tag{Eq. 10}$$

Where Eq. 9 expresses the assumption that the initial condition is 0 at time $t_1 = 0$; and Eq. 10 is for times $t_i$ with i = 2, ...,e. Using Eq. 10 recursively $N_r(t_i)$ may be computed (or be given) for times t = h,..., (e - 1)h and for r = 1, ..., 2N. For cases in which the initial conditions are not 0, a term for the initial condition $N_r(0)$, may be carried through the equations or may appear only in the first term (e.g., $N_r(t_2)$). Similarly, for a non-uniform distribution of times t = $t_1$, $t_2$ ..., $t_e$, $N_r(t)$ may be computed for t = $t_2$ ..., $t_e$ from known $H_r(t)$, $a_r$, and $\lambda_r$ based on a modified version of Eq. 10.

Based on the obtained (computed) set of $N_r(t)$, a set of forces, $f(t)$, and moments, $\tau(t)$, may be computed. For example, based on the following equation:

$$F(t) = \begin{pmatrix} f(t) \\ 0 \end{pmatrix} = (\Phi^T)^{-1} N(t); \text{ where } N(t) = (N_1(t), ..., N_{2N}(t))^T \tag{Eq. 11}$$

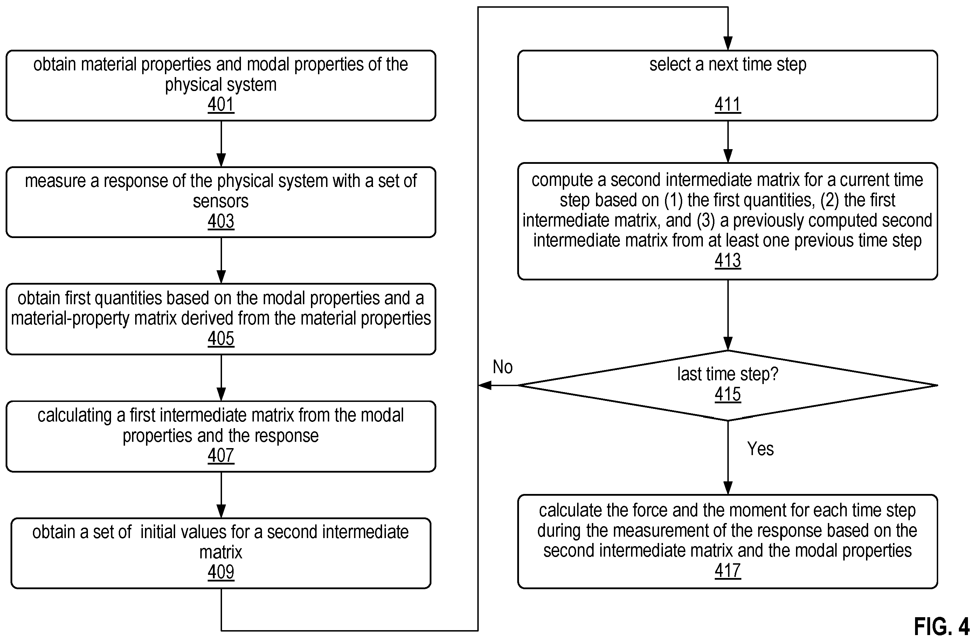

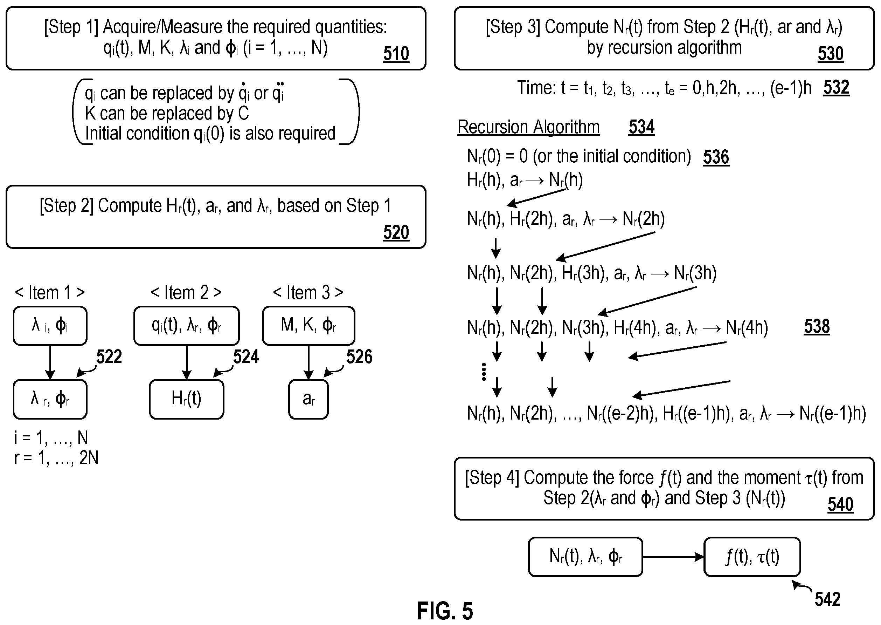

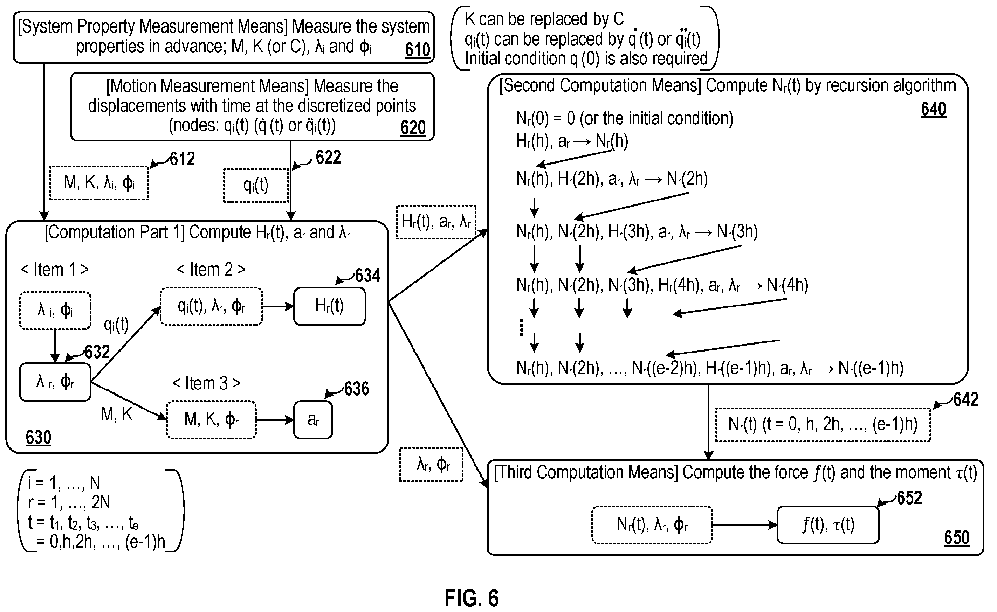

FIG. 4 illustrates an example flow diagram for the method. FIG. 5 illustrates sets of related operations performed by the system or as part of the method. FIG. 6 conceptually illustrates a system including a set of components that may perform the method of FIG. 4. Accordingly, FIGs. 4-6 will be discussed simultaneously. The method may be performed to compute force and moment associated with a physical system or structure that is discretized as a system including multiple nodes for the computation. At 40I, the method obtains material properties and modal properties of the physical structure or system. For example, the material properties may include one of (1) a mass, M, associated with the nodes of the physical system and a set of stiffness coefficients (values), K, associated with pairs of nodes of the physical system and/or (2) the mass, M, associated with the nodes of the physical system and a set of damping coefficients (values), C, associated with the pairs of nodes of the physical system. In some aspects, each of the material properties may be defined as an NxN matrix. The modal properties may include a set of mode shapes $\phi_i$ and natural frequencies $\lambda_i$ with i = 1, ..., N, where N is the number of DOF in the system. Obtaining the material properties is conceptually included in "Step 1" 510 of FIG. 5 which includes obtaining or measuring required values for calculations that are part of "Step 2." The material properties and modal properties 612 may be obtained by a system property measurement means 610 of FIG. 6, for example, in some aspects, a mass may be obtained by a scale, and modal properties $\phi_i$ and $\lambda_i$ may be measured using sensors via impact hammer testing, a shaker test, etc. The obtained material properties and modal properties of the physical system may include material properties and modal properties of each node in the physical structure or system.

Each node of the multiple nodes of the discretized system or structure, in some aspects, may be associated with a sensor that measures the response of the node. At 403, the sensors may measure a response of the physical system (e.g., to an impulse or external stimulus). The one or more sensors may measure a displacement $q_i(t)$, velocity $\dot{q}_i(t)$, or acceleration $\ddot{q}_i(t)$, where i = 1, ..., N. If the one or more sensors measure something other than the (transient) displacement, the measured value may be used to obtain the transient displacement values, $q_i(t)$. For example, for a measured velocity, $\dot{q}_i(t)$, (or acceleration, $\ddot{q}_i(t)$) the transient displacement may be obtained based on initial conditions, $q_i(0)$, and the equation(s) $\dot{q}_i(t) = \lambda_i q_i(t)$ (and $\ddot{q}_i(t) = \lambda_i \dot{q}_i(t)$). The displacement $q_i(t)$ may be a vector quantity including a set of linear displacement values (corresponding to a set of orthogonal vectors, e.g., $\hat{x}$, $\hat{y}$, $\hat{z}$) and a set of angular displacement values (corresponding to a set of rotations about the set of orthogonal vectors, e.g., $\theta_x, \theta_y, \theta_z$). A displacement vector may be defined for the whole system (e.g. plates 110, 210, or 260). For example, the vector q(t) = $(q_1(t), ..., q_N(t))^T$ may be defined. The displacement vector q(t) may be measured/obtained for a set of times t = $[t_1, t_2 ..., t_e]$. For example, measurement 403 may be conceptually included in "Step 1" 510 of FIG. 5 which includes obtaining or measuring required values for calculations that are part of "Step 2." The response 622 may be measured by a set of sensors that make up motion measurement means 620 of FIG. 6.

At 405, the system may obtain first quantities based on the modal properties and a material-property matrix derived from the material properties. The modal properties may be used to obtain second modal properties $\lambda_r$, $\phi_r$ with r = 1, ..., 2N and, in some aspects, for r = i = 1, ... , N, $\lambda_r = \lambda_i$ and $\phi_r = \phi_i$. The mode shapes $\phi_r$ and natural frequencies $\lambda_r$, in some aspects, are complex-valued eigensolutions for non-proportionally damped systems in general. When the complex-valued eigensolutions, $\phi_i$ and $\lambda_i$, are obtained, a complex conjugate is also obtained, and for r = N + 1, ..., 2N, $\lambda_r$ and $\phi_r$ are the complex conjugates of $\lambda_i$ and $\phi_i$ (for i = 1, ..., N), respectively. When the complex-valued eigensolutions, $\phi_i$ and $\lambda_i$ are not (or cannot be) obtained, for r = N + 1, ... , 2N, $\lambda_r$ and $\phi_r$ may be approximated by $\lambda_i$ and $\phi_i$ (for i = 1, ..., N). For example, obtaining the modal properties $\lambda_r$ and $\phi_r$ 522 may be conceptually included in "Step 2" 520 of FIG. 5 which includes computing multiple quantities and matrixes. The computation of quantities 632 may be performed by a first computation means 630 based on material properties and modal properties 612 of FIG. 6.

Additionally, the material properties may be used to generate a material-property matrix used in subsequent computations/calculations. The material-property matrix may include one of (1) mass matrix, M, and damping matrix, C or (2) mass matrix, M, and stiffness matrix, K. For example, a 2Nx2N matrix $A = \begin{bmatrix} C & M \\ M & 0 \end{bmatrix}$ or $B = \begin{bmatrix} K & 0 \\ 0 & -M \end{bmatrix}$ may be generated based on the material properties. The matrix A or B and the second modal properties ($\lambda_r$ and $\phi_r$) may be used in turn to compute/calculate the first quantities $a_r$ 526 in "Step 2" 520 of FIG. 5. For example, the computation of quantities 636 may be performed by a first computation means 630 based on material properties and modal properties 612 of FIG. 6. As discussed above, the obtained first quantities may be quantities on a diagonal of a matrix (e.g., on diagonal components of a matrix) that is a result of pre-multiplying the material-property matrix by a transposed modal property matrix (e.g., $\Phi^T A$) and post-multiplying the result by the modal property matrix (e.g., $\Phi^T A\Phi$), the modal property matrix (e.g., $\Phi$) may include (i) a first set of mode shape vectors (e.g., $\phi_r$) and (ii) a second set of products of mode shape vectors and natural frequencies (e.g., $\lambda_r\phi_r$). For example, $\Phi_{2Nx2N}$ = ($\Phi_1$ ... , $\Phi_{2N}$), with $\Phi_r = \begin{pmatrix} \phi_r \\ \lambda_r \phi_r \end{pmatrix}_{2Nx1}$.

At 407, the system may calculate a first intermediate matrix from the modal properties and the response. For example, based on, e.g., Eq. 8 (H(t) = $\Phi^{-1}$Q(t)), a first intermediate matrix H(t) may be calculated. As described above, calculating the first intermediate matrix, H(t), may include pre-multiplying (1) a response matrix (e.g., $Q(t) = \begin{pmatrix} q(t) \\ \dot{q}(t) \end{pmatrix}$) comprising (i) a first set of displacement vectors (e.g., q(t)) and (ii) a second set of velocity vectors (e.g., $\dot{q}(t)$) by (2) an inverse modal property matrix (e.g., $\Phi^{-1}$ = ($\Phi_1$, ..., $\Phi_{2N}$)$^{-1}$, with $\Phi_r = \begin{pmatrix} \phi_r \\ \lambda_r \phi_r \end{pmatrix}_{2Nx1}$ as described in relation to Eq. 8), the modal property matrix comprising (i) a first set of mode shape vectors (e.g., $\phi_r$) and (ii) a second set of products of mode shape vectors and natural frequencies (e.g., $\lambda_r\phi_r$). Each column (e.g., $H_r(t_i)$) of the resulting matrix (e.g., $H(t_i)$), in some aspects, is the first intermediate matrix associated with a particular time step. For example, H(t) 524 may be computed/calculated based on the second modal properties ($\lambda_r$ and $\phi_r$) and response q(t) acquired or measured at 510 of FIG. 5.

For example, first computation means 630 may compute H(t) 634 based on obtained modal properties 612 and the measured response 622.

At 409, a set of initial values for a second intermediate matrix may be obtained or computed. For example, for a system that begins at rest, the initial conditions (values) may be zeros and for a system for which measurement begins after forces act upon the system the initial values may be non-zero values based on the measured response of the system. The initial conditions (values), $q(0)$, may be obtained, for example, in "Step 1" 510 of FIG. 5, a set of values $\lambda_r$, $\phi_r$, $H_r(0)$, and $a_r$ may be calculated as in "Step 2" 520, and a set of initial values for a second intermediate matrix (or vector), N(0) 536, may be calculated by "Step 3" 530 using Eq. 7. For example, the motion measurement means 620 of FIG. 6 may measure the initial conditions (values), q(0), as part of measuring the response, $q_i(t)$, 622. Based on the initial conditions, q(0) included in 612, and the modal properties 522 and/or 632, the first computation means 630 may compute/calculate $H(t)$ 634, including H(0) . Based on $H(0)$ and $a_r$ 526, the second computation means 640 may compute the initial values (conditions) for the second intermediate matrix (or vector) N(0).

After the set of initial values for a first time $t_1 = 0$, (e.g., $N(0) = (N_1(0), ... , N_{2N}(0))$), are obtained/calculated, the system may select, at 411 a next time step (e.g., $t_2 = h$) for evaluation/calculation of the second intermediate matrix N(t) (or second intermediate matrix component $N_r(t)$). The next time step may be an immediately subsequent time step, $t_i$, for a recursive computation of the second intermediate matrix N(t) (or second intermediate matrix component $N_r(t)$) for the subsequent time step(s).

At 413, the method may compute, for the selected time step in the time interval associated with the measured response, $t_i$, a second intermediate matrix N(t) (or second intermediate matrix component, or vector, $N_r(t)$) based on (1) the first quantities (e.g., $a_r$), (2) the second modal properties (e.g., $\lambda_r$ and $\phi_r$), (3) the first intermediate matrix $H(t_i)$ (or matrix component $H_r(t_i)$), and (4) a previously computed second intermediate matrix $N(t_j)$ (or second intermediate matrix component $N_r(t_j)$) from at least one previous time step (e.g., for $j = 1, ..., (i - 1)$). The recursive computation may be based on a first intermediate matrix $H(t_i)$ (or matrix component $H_r(t_i)$) associated with the selected time step, $t_i$, and at least one second intermediate matrix $N(t_j)$ (or second intermediate matrix component $N_r(t_j)$) associated with a previous time step (e.g., for $j = 1, ..., (i - 1)$) as described in relation to Eqs. 9-11. For example, for a time $t_5 = 4h$, $N_r(4h)$ 538 may be calculated based on recursion algorithm 534 from $N_r(3h)$, $N_r(2h)$, $N_r(h)$, $N_r(0)$ 536, $H_r(4h)$ 524, and $a_r$ 526 in "Step 3." Referring to FIG. 6, the second computing means 640 may perform the calculation based on the recursion algorithm.

Computing the second intermediate matrix for a particular time step may include multiplying the first intermediate matrix, $H(t_i)$, by at least one of the obtained first quantities (e.g., $a_r$). The result of multiplying the first intermediate matrix by the at least one of the obtained first quantities (e.g., $a_r H_r(t_i)$) may be divided by a time-step size (or a time step size associated with the particular time step) (e.g., $a_r H_r(t_i)/h$ or $a_r H_r(t_i)/(t_i - t_{i-1})$). The method may then subtract a value based on a previously computed second intermediate matrix (e.g., $N_r(t_j)$) from at least one previous time step (e.g., j = 0, ..., (i - 1)).

At 415, the method may determine whether the selected time step, $t_i$, is a last time step, $t_e$, in the time interval associated with the measured response. For example, the method may determine that the selected time step, $t_i$, is a last time step, $t_e$, in the time interval 532 of FIG. 5. If the time step selected at 411 is determined at 415 to not be the last time step in the time interval associated with the measured response, the method returns to 411 and selects a next time step.

If the time step selected 411 is determine at 415 to be a last time step in the time interval associated with the measured response, the method may calculate, at 417, the force and the moment for each time step during the measurement of the response based on the second intermediate matrix and the modal properties as described in relation to Eq. 11. For example, calculating (or computing) the force 542 may be a part of a last step "Step 4" 540 that computes the force based on N(t) calculated in "Step 3" and based on $\lambda_r$ and $\phi_r$ calculated in "Step 2." Referring to FIG. 6, third computation means 650 may calculate force and moment values 652 based on the values of $\lambda_r$ and $\phi_r$ 632 computed by the first computation means 630 and the $N(t) = N_r(t), t = 0, h, ..., (e - 1)h, r = 1, ..., 2N$ 642 computed by the second computation means 640. For example, calculating the force and the moment for each time step comprises pre-multiplying at least one second intermediate matrix (e.g., $N(t)$) for each time step by an inverse of a transpose of a modal property matrix (e.g., $(\Phi^T)^{-1}N(t)$), the modal property matrix (e.g., $\Phi$) may include (i) a first set of mode shape vectors (e.g., $\phi_r$) and (ii) a second set of products of mode shape vectors and natural frequencies (e.g., $\lambda_r \phi_r$). For example, $\Phi = (\Phi_1, ... , \Phi_{2N})$ , with

$$\Phi_r = \begin{pmatrix} \phi_r \\ \lambda_r \phi_r \end{pmatrix}_{2Nx1} .$$

The distinction between the first computation means 630, the second computation means 640 and the third computation means 650, in some aspects, is an artificial distinction for the purposes of describing conceptually separate sets of computations that may be carried out by a same computation means (e.g., a central processing unit, general processing unit, or other processor). The system property measurement means 610 and motion measurement means 620 may be coupled to the processor to provide the material properties and modal properties 612 and the measured response 622.

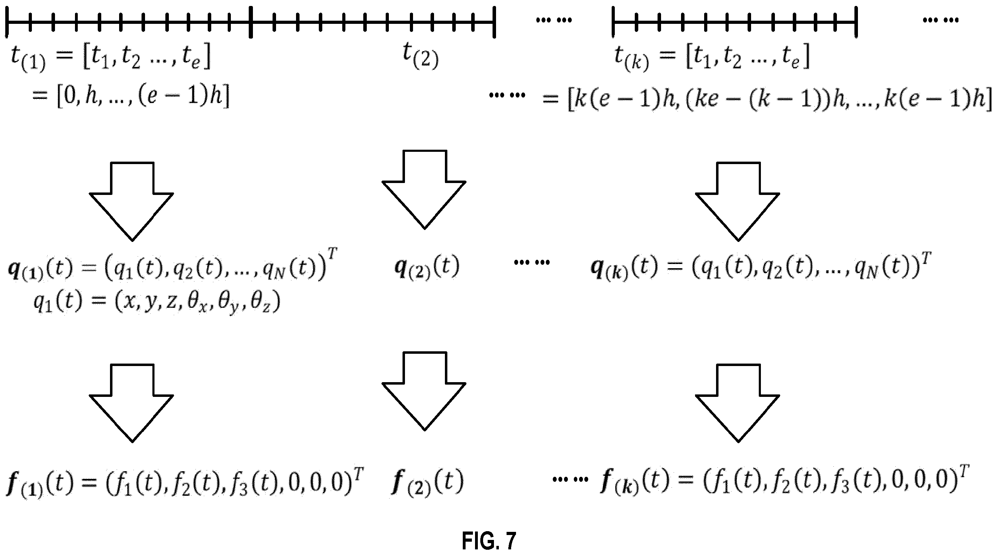

While FIGs. 4-6 illustrate a force calculation for a particular time interval, e.g., time interval 532, FIG. 7 is a diagram of multiple consecutive measurement time intervals for which the operations of FIGs. 4-6 may be performed to perform online monitoring of forces and moments. For example, by setting a time interval, $t_e$, that is relatively small the force and moment may be calculated for each time period, $t_{(j)}$, (e.g., a time period spanning a time interval $t_e$) where j = 1, ..., k and the force and moment for each time at which a measurement is taken during the time interval. The computed force and moment may be available (e.g., for a first time/measurement in a time period) for a measurement interval after (1) the measurement interval has elapsed and (2) a processing time. By reducing the measurement interval, both the measurement interval and the processing time may be reduced providing feedback/data that is closer to real-time than for a longer measurement interval.

Using the above method, non-transitory computer readable medium, system, or apparatus allows for analysis of forces and moments during highly transient states associated with a structure. Additionally, the method, non-transitory computer readable medium, system, or apparatus may be used for structures with general (e.g., non-proportional) viscous damping and for locally (e.g., highly non-proportional) damped structures.

For example, the method, non-transitory computer readable medium, system, or apparatus may be used to quantify, for highly transient states, the contribution of the structure-borne sound through each mount of a set of engine mounts to determine which mount transmits the most sound and/or energy to the interior of a vehicle. For example, using the method described above enables quantification of the highly transient force and moment through each mount without directly measuring the force or moment, which is usually difficult. The computed transient force and moment can be used to compare the mounts for effective countermeasures.

Automotive suspension control may also benefit from the method described above. For example, automotive suspension control is usually based on the suspension motion (acceleration), because acceleration is easy to measure by a sensor. This method enables to compute the force (and moment) at each suspension. The computed force (and moment) is an alternative quantity to control the suspension. Using force instead of acceleration for control, in some aspects, may be beneficial.

The method may also provide true transient transfer path analysis (TPA) software. TPA is a method to quantify the contribution of each structure-borne path to the sound at a point. The engine mount described above is a typical application of the frequency-domain TPA. The true-transient TPA requires the interfacial force and moment computation in the time domain. Accordingly, the method described above can be used to conduct the true-transient TPA.

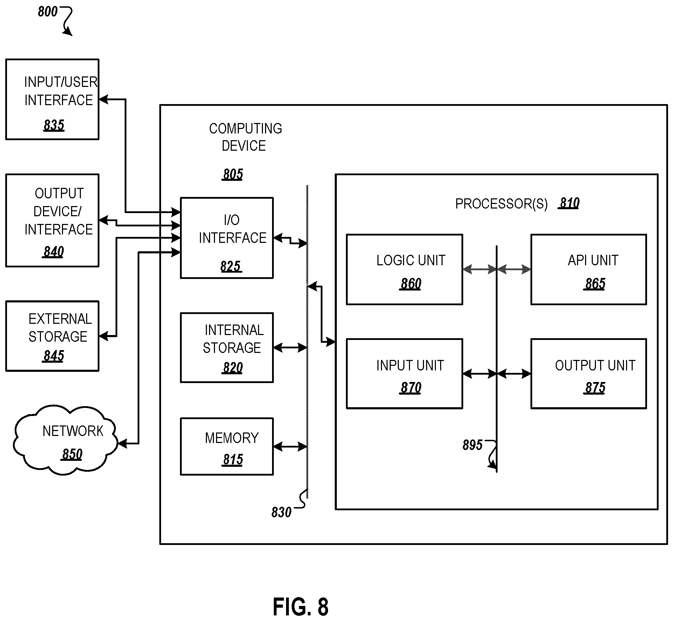

FIG. 8 illustrates an example computing environment with an example computer device suitable for use in some example implementations. Computer device 805 in computing environment 800 can include one or more processing units, cores, or processors 810, memory 815 (e.g., RAM, ROM, and/or the like), internal storage 820 (e.g., magnetic, optical, solid-state storage, and/or organic), and/or IO interface 825, any of which can be coupled on a communication mechanism or bus 830 for communicating information or embedded in the computer device 805. IO interface 825 is also configured to receive images from cameras or provide images to projectors or displays, depending on the desired implementation.

Computer device 805 can be communicatively coupled to input/user interface 835 and output device/interface 840. Either one or both of the input/user interface 835 and output device/interface 840 can be a wired or wireless interface and can be detachable. Input/user interface 835 may include any device, component, sensor, or interface, physical or virtual, that can be used to provide input (e.g., buttons, touch-screen interface, keyboard, a pointing/cursor control, microphone, camera, braille, motion sensor, accelerometer, optical reader, and/or the like). Output device/interface 840 may include a display, television, monitor, printer, speaker, braille, or the like. In some example implementations, input/user interface 835 and output device/interface 840 can be embedded with or physically coupled to the computer device 805. In other example implementations, other computer devices may function as or provide the functions of input/user interface 835 and output device/interface 840 for a computer device 805.

Examples of computer device 805 may include, but are not limited to, highly mobile devices (e.g., smartphones, devices in vehicles and other machines, devices carried by humans and animals, and the like), mobile devices (e.g., tablets, notebooks, laptops, personal computers, portable televisions, radios, and the like), and devices not designed for mobility (e.g., desktop computers, other computers, information kiosks, televisions with one or more processors embedded therein and/or coupled thereto, radios, and the like).

Computer device 805 can be communicatively coupled (e.g., via IO interface 825) to external storage 845 and network 850 for communicating with any number of networked components, devices, and systems, including one or more computer devices of the same or different configuration. Computer device 805 or any connected computer device can be functioning as, providing services of, or referred to as a server, client, thin server, general machine, special-purpose machine, or another label.

IO interface 825 can include but is not limited to, wired and/or wireless interfaces using any communication or IO protocols or standards (e.g., Ethernet, 802.11x, Universal System Bus, WiMax, modem, a cellular network protocol, and the like) for communicating information to and/or from at least all the connected components, devices, and network in computing environment 800. Network 850 can be any network or combination of networks (e.g., the Internet, local area network, wide area network, a telephonic network, a cellular network, satellite network, and the like).

Computer device 805 can use and/or communicate using computer-usable or computer readable media, including transitory media and non-transitory media. Transitory media include transmission media (e.g., metal cables, fiber optics), signals, carrier waves, and the like. Non-transitory media include magnetic media (e.g., disks and tapes), optical media (e.g., CD ROM, digital video disks, Blu-ray disks), solid-state media (e.g., RAM, ROM, flash memory, solid-state storage), and other non-volatile storage or memory.

Computer device 805 can be used to implement techniques, methods, applications, processes, or computer-executable instructions in some example computing environments. Computer-executable instructions can be retrieved from transitory media, and stored on and retrieved from non-transitory media. The executable instructions can originate from one or more of any programming, scripting, and machine languages (e.g., C, *C++, C#,* Java, Visual Basic, Python, Perl, JavaScript, and others).

Processor(s) 810 can execute under any operating system (OS) (not shown), in a native or virtual environment. One or more applications can be deployed that include logic unit 860, application programming interface (API) unit 865, input unit 870, output unit 875, and inter-unit communication mechanism 895 for the different units to communicate with each other, with the OS, and with other applications (not shown). The described units and elements can be varied in design, function, configuration, or implementation and are not limited to the descriptions provided. Processor(s) 810 can be in the form of hardware processors such as central processing units (CPUs) or in a combination of hardware and software units.

In some example implementations, when information or an execution instruction is received by API unit 865, it may be communicated to one or more other units (e.g., logic unit 860, input unit 870, output unit 875). In some instances, logic unit 860 may be configured to control the information flow among the units and direct the services provided by API unit 865, the input unit 870, the output unit 875, in some example implementations described above. For example, the flow of one or more processes or implementations may be controlled by logic unit 860 alone or in conjunction with API unit 865. The input unit 870 may be configured to obtain input for the calculations described in the example implementations, and the output unit 875 may be configured to provide an output based on the calculations described in example implementations.

Processor(s) 810 can be configured to obtain (1) material properties, (2) first modal properties of the physical system. The processor(s) 810 may be configured to generate (1) a material property matrix from the material properties and (2) second modal properties from the obtained modal properties. The processor(s) 810 may also be configured to measure, via one or more sensors, a set of motion responses of the physical system. The processor(s) 810 may be configured to obtain first quantities based on the second modal properties and the material property matrix. The processor(s) 810 may further be configured to calculate a first intermediate matrix from the second modal properties and the set of motion responses. The processor(s) 810 may be configured to recursively compute, for each time step during measurement of the response, a second intermediate matrix based on (1) the first quantities, (2) the second modal properties, (3) the first intermediate matrix, and (4) a previously computed second intermediate matrix from at least one previous time step. The processor(s) 810 may be configured to calculate the force and the moment for each time step during the measurement of the response based on the second intermediate matrix and the modal properties.

The processor(s) 810 can also be configured to multiply the first intermediate matrix by the obtained first quantities, divide a result of the multiplication by a time-step size, and subtract a value based on a previously computed second intermediate matrix from at least one previous time step. The processor(s) 810 can also be configured to pre-multiply at least one second intermediate matrix for each time step by an inverse of a transpose of a modal property matrix, the modal property matrix including (i) a first set of mode shape vectors and (ii) a second set of products of mode shape vectors and natural frequencies.

Some portions of the detailed description are presented in terms of algorithms and symbolic representations of operations within a computer. These algorithmic descriptions and symbolic representations are the means used by those skilled in the data processing arts to convey the essence of their innovations to others skilled in the art. An algorithm is a series of defined steps leading to a desired end state or result. In example implementations, the steps carried out require physical manipulations of tangible quantities for achieving a tangible result.

Unless specifically stated otherwise, as apparent from the discussion, it is appreciated that throughout the description, discussions utilizing terms such as "processing," "computing," "calculating," "determining," "displaying," or the like, can include the actions and processes of a computer system or other information processing device that manipulates and transforms data represented as physical (electronic) quantities within the computer system's registers and memories into other data similarly represented as physical quantities within the computer system's memories or registers or other information storage, transmission or display devices.

Example implementations may also relate to an apparatus for performing the operations herein. This apparatus may be specially constructed for the required purposes, or it may include one or more general-purpose computers selectively activated or reconfigured by one or more computer programs. Such computer programs may be stored in a computer readable medium, such as a computer readable storage medium or a computer readable signal medium. A computer readable storage medium may involve tangible mediums such as, but not limited to optical disks, magnetic disks, read-only memories, random access memories, solid-state devices, and drives, or any other types of tangible or non-transitory media suitable for storing electronic information. A computer readable signal medium may include mediums such as carrier waves. The algorithms and displays presented herein are not inherently related to any particular computer or other apparatus. Computer programs can involve pure software implementations that involve instructions that perform the operations of the desired implementation.

Various general-purpose systems may be used with programs and modules in accordance with the examples herein, or it may prove convenient to construct a more specialized apparatus to perform desired method steps. In addition, the example implementations are not described with reference to any particular programming language. It will be appreciated that a variety of programming languages may be used to implement the teachings of the example implementations as described herein. The instructions of the programming language(s) may be executed by one or more processing devices, e.g., central processing units (CPUs), processors, or controllers.

As is known in the art, the operations described above can be performed by hardware, software, or some combination of software and hardware. Various aspects of the example implementations may be implemented using circuits and logic devices (hardware), while other aspects may be implemented using instructions stored on a machine-readable medium (software), which if executed by a processor, would cause the processor to perform a method to carry out implementations of the present application. Further, some example implementations of the present application may be performed solely in hardware, whereas other example implementations may be performed solely in software. Moreover, the various functions described can be performed in a single unit, or can be spread across a number of components in any number of ways. When performed by software, the methods may be executed by a processor, such as a general-purpose computer, based on instructions stored on a computer readable medium. If desired, the instructions can be stored on the medium in a compressed and/or encrypted format.

## Claims

1.  A method for computation of force and moment in a time domain for a physical system comprising one or more physical sensors, the method comprising:

    obtaining (1) material properties and (2) first modal properties of the physical system;
    generating (1) a material property matrix from the material properties and (2) second modal properties from the obtained modal properties, where the second modal properties include the first modal properties and the complex conjugates of the first modal properties;
    measuring, via one or more sensors, a set of motion responses of the physical system;
    obtaining first quantities based on the second modal properties and the material property matrix wherein the material property matrix comprises one of (1) a set of masses and a set of damping values associated with the physical system or (2) a set of masses and a set of stiffness values associated with the physical system, and wherein the obtained first quantities are quantities on diagonal components of a matrix that is a result of pre-multiplying the material property matrix by a transposed second modal property matrix and post-multiplying the result by the second modal property matrix, the second modal property matrix comprising (i) a first set of mode shape vectors and (ii) a second set of products of mode shape vectors and natural frequencies.;
    calculating a first intermediate matrix from the second modal properties and the set of motion responses wherein calculating the first intermediate matrix comprises pre-multiplying (1) a motion response matrix comprising (i) a first set of displacement vectors and (ii) a second set of velocity vectors by (2) an inverse second modal property matrix, the second modal property matrix comprising (i) a first set of mode shape vectors and (ii) a second set of products of mode shape vectors and natural frequencies, wherein each column of a resulting first intermediate matrix is the first intermediate matrix associated with a particular time step;
    recursively computing, for each time step during measurement of the response, a second intermediate matrix based on (1) the first quantities, (2) the second modal properties, (3) the first intermediate matrix, and (4) a previously computed second intermediate matrix from at least one previous time step wherein recursively computing the second intermediate matrix for a particular time step comprises:

    multiplying the first intermediate matrix by at least one of the obtained first quantities;
    dividing a result of multiplying the first intermediate matrix by the at least one of the obtained first quantities by a time-step size; and
    subtracting a value based on a previously computed second intermediate matrix from at least one previous time step according to:

$$N_r((i-1)h) = 2(a_r H_r((i-1)h)/h \; - \; \sum_{j=1}^{i-2} N_r(jh)e^{(i-1-j)h\lambda_r})$$

    for times t with i = 2,...,e where e is the number of time steps, and wherein $N_r(t)$ is the second intermediate matrix component, h is the time-step size, $a_r$ is a first quantity, $H_r(t)$ is the first intermediate matrix component,

and $\lambda_r$ is a natural frequency, and wherein $N_r(0) = 0$; and,

calculating the force and the moment for each time step during the measurement of the set of motion responses based on the second intermediate matrix and the second modal properties wherein calculating the force and the moment for each time step comprises pre-multiplying at least one second intermediate matrix for each time step by an inverse of a transpose of a second modal property matrix, the second modal property matrix comprising (i) a first set of mode shape vectors and (ii) a second set of products of mode shape vectors and natural frequencies.

2. The method of claim 1, wherein:

the material properties comprise a set of masses and a set of stiffness values associated with the physical system and a set of masses and a set of damping values associated with the physical system,
the first modal properties and the second modal properties comprise one or more mode shapes and one or more natural frequencies associated with the physical system, and
the measured set of motion responses is at least one of a set of displacements, a set of velocities, or a set of accelerations.

3. The method of claim 1, wherein the physical system is a discretized system comprising a plurality of nodes and each node in the plurality of nodes is associated with a sensor that measures a motion response of the node in the set of motion responses.

4. The method of claim 3, wherein the obtained material properties and first modal properties of the physical system comprise material properties and first modal properties associated with each node in the physical system.

5. A non-transitory computer-readable medium storing a program for computation of force and moment in a time domain for a physical system comprising one or more physical sensors for execution by at least one processor, the program comprising sets of instructions for:

obtaining (1) material properties and (2) first modal properties of the physical system;
generating (1) a material property matrix from the material properties and (2) second modal properties from the obtained modal properties where the second modal properties include the first modal properties and the complex conjugates of the first modal properties;
measuring, via the one or more physical sensors a set of motion responses of the physical system;
obtaining first quantities based on the second modal properties and the material property matrix, wherein the material property matrix comprises one of (1) a set of masses and a set of damping values associated with the physical system or (2) a set of masses and a set of stiffness values associated with the physical system, and wherein the obtained first quantities are quantities on diagonal components of a matrix that is a result of pre-multiplying the material property matrix by a transposed second modal property matrix and post-multiplying the result by the second modal property matrix, the second modal property matrix comprising (i) a first set of mode shape vectors and (ii) a second set of products of mode shape vectors and natural frequencies;
calculating a first intermediate matrix from the second modal properties and the set of motion responses, wherein the set of instructions for calculating the first intermediate matrix comprises a set of instructions for pre-multiplying (1) a motion response matrix comprising (i) a first set of displacement vectors and (ii) a second set of velocity vectors by (2) an inverse second modal property matrix, the second modal property matrix comprising (i) a first set of mode shape vectors and (ii) a second set of products of mode shape vectors and natural frequencies, wherein each column of a resulting first intermediate matrix is the first intermediate matrix associated with a particular time step;
recursively computing, for each time step during measurement of the response, a second intermediate matrix based on (1) the first quantities, (2) the second modal properties, (3) the first intermediate matrix, and (4) a previously computed second intermediate matrix from at least one previous time step, wherein the set of instructions for recursively computing the second intermediate matrix for a particular time step comprises sets of instructions for:

multiplying the first intermediate matrix by at least one of the obtained first quantities;
dividing a result of multiplying the first intermediate matrix by the at least one of the obtained first quantities by a time-step size; and
subtracting a value based on a previously computed second intermediate matrix from at least one previous time step according to:

$$N_r((i-1)h) = 2(a_r H_r((i-1)h)/h \ - \ \sum_{j=1}^{i-2} N_r(jh)e^{(i-1-j)h\lambda_r})$$

and

for times t with i = 2,...,e where e is the number of time steps, and wherein $N_r(t)$ is the second intermediate matrix component, h is the time-step size, $a_r$ is a first quantity, $H_r(t)$ is the first intermediate matrix component, and $\lambda_r$ is a natural frequency, and wherein $N_r(0) = 0$; and,

calculating the force and the moment for each time step during the measurement of the set of motion responses based on the second intermediate matrix and the second modal properties, wherein the set of instructions for calculating the force and the moment for each time step comprises a set of instructions for pre-multiplying at least one second intermediate matrix for each time step by an inverse of a transpose of a second modal property matrix, the second modal property matrix comprising (i) a first set of mode shape vectors and (ii) a second set of products of mode shape vectors and natural frequencies.

6. The non-transitory computer-readable medium of claim 5, wherein:

the material properties comprise one of (1) a set of masses and a set of stiffness values associated with the physical system or (2) a set of masses and a set of damping values associated with the physical system, the first modal properties and the second modal properties comprise one or more mode shapes and one or more natural frequencies associated with the physical system, and the measured set of motion responses is at least one of a set of displacements, a set of velocities, or a set of accelerations.

7. The non-transitory computer-readable medium of claim 5, wherein the physical system is a discretized system comprising a plurality of nodes and each node in the plurality of nodes is associated with a sensor that measures a motion response of the node in the set of motion responses.

8. The non-transitory computer-readable medium of claim 7, wherein the obtained material properties and first modal properties of the physical system comprise material properties and first modal properties associated with each node in the physical system.

9. An apparatus for computation of force and moment in a time domain for a physical system comprising one or more physical sensors the apparatus comprising:

a memory; and
at least one processor coupled to the memory and configured to carry out the method of claim 1.

10. The apparatus of claim 9, wherein:

the material properties comprise a set of masses and a set of stiffness values associated with the physical system and a set of masses and a set of damping values associated with the physical system, the first modal properties and the second modal properties comprise one or more mode shapes and one or more natural frequencies associated with the physical system, and the measured set of motion responses is at least one of a set of displacements, a set of velocities, or a set of accelerations.

11. The apparatus of claim 9, wherein the physical system is a discretized system comprising a plurality of nodes, each node in the plurality of nodes is associated with a sensor that measures a motion response of the node in the set of motion responses, and the obtained material properties and first modal properties of the physical system comprise material properties and first modal properties associated with each node in the physical system.

**Patentansprüche**

1. Verfahren zum Berechnen einer Kraft und eines Drehmoments in einem Zeitbereich für ein physikalisches System, das einen oder mehrere physikalische Sensoren umfasst, wobei das Verfahren Folgendes umfasst:

Erhalten (1) von Materialeigenschaften und (2) ersten Modaleigenschaften des physikalischen Systems;

Erzeugen (1) einer Materialeigenschaftsmatrix aus den Materialeigenschaften und (2) zweiten Modaleigenschaften aus den erhaltenen Modaleigenschaften, wobei die zweiten Modaleigenschaften die ersten Modaleigenschaften und die komplexen Konjugate der ersten Modaleigenschaften beinhalten;

Messen, mittels eines oder mehrerer Sensoren, eines Satzes von Bewegungsreaktionen des physikalischen Systems;

Erhalten erster Größen basierend auf den zweiten Modaleigenschaften und der Materialeigenschaftsmatrix, wobei die Materialeigenschaftsmatrix eines aus (1) einem Satz von Massen und einem Satz von Dämpfungswerten, die dem physikalischen System zugeordnet sind oder (2) einem Satz von Massen und einem Satz von Steifigkeitswerten, die dem physikalischen System zugeordnet sind, umfassen und wobei die erhaltenen ersten Größen Größen bezogen auf Diagonalkomponenten einer Matrix sind, die das Ergebnis einer Vormultiplikation der Materialeigenschaftsmatrix mit einer transponierten zweiten Modaleigenschaftsmatrix und einer Nachmultiplikation des Ergebnisses mit der zweiten Modaleigenschaftsmatrix sind, wobei die zweite Modaleigenschaftsmatrix (i) einen ersten Satz von Modusformvektoren und (ii) einen zweiten Satz von Produkten aus Modusformvektoren und Eigenfrequenzen umfasst;

Berechnen einer ersten Zwischenmatrix aus den zweiten Modaleigenschaften und dem Satz von Bewegungsreaktionen, wobei das Berechnen der ersten Zwischenmatrix das Vormultiplizieren (1) einer Bewegungsreaktionsmatrix, die (i) einen ersten Satz von Verschiebungsvektoren und (ii) einen zweiten Satz von Geschwindigkeitsvektoren umfasst, mit (2) einer inversen zweiten Modaleigenschaftsmatrix umfasst, wobei die zweite Modaleigenschaftsmatrix (i) einen ersten Satz von Modusformvektoren und (ii) einen zweiten Satz von Produkten aus Modusformvektoren und Eigenfrequenzen umfasst, wobei jede Spalte einer resultierenden ersten Zwischenmatrix die erste Zwischenmatrix ist, die dem jeweiligen Zeitschritt zugeordnet ist;

rekursives Berechnen, für jeden Zeitschritt während der Messung der Reaktion, einer zweiten Zwischenmatrix basierend auf (1) den ersten Größen, (2) den zweiten Modaleigenschaften, (3) der ersten Zwischenmatrix und (4) einer zuvor berechneten zweiten Zwischenmatrix von zumindest einem vorherigen Zeitschritt, wobei das rekursive Berechnen der zweiten Zwischenmatrix für einen jeweiligen Zeitschritt Folgendes umfasst:

Multiplizieren der ersten Zwischenmatrix mit zumindest einer aus den erhaltenen ersten Größen;

Dividieren des Ergebnisses der Multiplikation der ersten Zwischenmatrix mit dem zumindest einen der erhaltenen ersten Größen durch eine Zeitschrittweite; und

Subtrahieren eines Werts, der auf einer zuvor berechneten zweiten Zwischenmatrix basiert, von zumindest einem vorherigen Zeitschritt gemäß:

$$N_r((i-1)h) = 2(a_r H_r((i-1)h)/h \; - \; \sum_{j=1}^{i-2} N_r(jh) e^{(i-1-j)h\lambda_r})$$

für Zeiten t mit i = 2,...,e, wobei e die Anzahl an Zeitschritten ist und wobei $N_r(t)$ die zweite Zwischenmatrixkomponente ist, h die Zeitschrittweite ist, $a_r$ eine erste Größe ist, $H_r(t)$ die erste Zwischenmatrixkomponente ist und $\lambda_r$ eine Eigenfrequenz ist und wobei $N_r(0) = 0$ ist; und

Berechnen der Kraft und des Drehmoments für jeden Zeitschritt während der Messung des Satzes von Bewegungsreaktionen basierend auf der zweiten Zwischenmatrix und den zweiten Modaleigenschaften, wobei das Berechnen der Kraft und des Drehmoments für jeden Zeitschritt das Vormultiplizieren zumindest einer zweiten Zwischenmatrix für jeden Zeitschritt mit einer Inversen einer Transponierten einer zweiten Modaleigenschaftsmatrix umfasst, wobei die zweite Modaleigenschaftsmatrix (i) einen ersten Satz von Modusformvektoren und (ii) einen zweiten Satz von Produkten aus Modusformvektoren und Eigenfrequenzen umfasst.

2. Verfahren nach Anspruch 1, wobei:

die Materialeigenschaften einen Satz von Massen und einen Satz von Steifigkeitswerten, die dem physikalischen System zugeordnet sind, und einen Satz von Massen und einen Satz von Dämpfungswerten, die dem physikalischen System zugeordnet sind, umfassen,

die ersten Modaleigenschaften und die zweiten Modaleigenschaften eine oder mehrere Modusformen und eine oder mehrere Eigenfrequenzen umfassen, die dem physikalischen System zugeordnet sind,

der gemessene Satz von Bewegungsreaktionen zumindest ein Satz aus Verschiebungen, ein Satz von Geschwindigkeiten oder ein Satz von Beschleunigungen ist.

3. Verfahren nach Anspruch 1, wobei das physikalische System ein diskretisiertes System ist, das eine Vielzahl von Knoten umfasst, und jeder Knoten der Vielzahl von Knoten einem Sensor zugeordnet ist, der eine Bewegungsreaktion des Knotens im Satz von Bewegungsantworten misst.

4. Verfahren nach Anspruch 3, wobei die erhaltenen Materialeigenschaften und ersten Modaleigenschaften des physikalischen Systems Materialeigenschaften und erste Modaleigenschaften umfassen, die jedem Knoten im physikalischen System zugeordnet sind.

5. Nichtflüchtiges, computerlesbares Medium, auf dem ein Programm zur Berechnung einer Kraft und eines Drehmoments in einem Zeitbereich für ein physikalisches System, das einen oder mehrere physikalische Sensoren umfasst, durch Ausführung durch zumindest einen Prozessor gespeichert ist, wobei das Programm Sätze von Befehlen für Folgendes umfasst:

Erhalten (1) von Materialeigenschaften und (2) ersten Modaleigenschaften des physikalischen Systems;
Erzeugen (1) einer Materialeigenschaftsmatrix aus den Materialeigenschaften und (2) zweiten Modaleigenschaften aus den erhaltenen Modaleigenschaften, wobei die zweiten Modaleigenschaften die ersten Modaleigenschaften und die komplexen Konjugate der ersten Modaleigenschaften beinhalten;
Messen, mittels des einen oder der mehreren Sensoren, eines Satzes von Bewegungsreaktionen des physikalischen Systems;
Erhalten erster Größen basierend auf den zweiten Modaleigenschaften und der Materialeigenschaftsmatrix, wobei die Materialeigenschaftsmatrix eines aus (1) einem Satz von Massen und einem Satz von Dämpfungswerten, die dem physikalischen System zugeordnet sind oder (2) einem Satz von Massen und einem Satz von Steifigkeitswerten, die dem physikalischen System zugeordnet sind, umfassen und wobei die erhaltenen ersten Größen Größen bezogen auf Diagonalkomponenten einer Matrix sind, die das Ergebnis einer Vormultiplikation der Materialeigenschaftsmatrix mit einer transponierten zweiten Modaleigenschaftsmatrix und einer Nachmultiplikation des Ergebnisses mit der zweiten Modaleigenschaftsmatrix ist, wobei die zweite Modaleigenschaftsmatrix (i) einen ersten Satz von Modusformvektoren und (ii) einen zweiten Satz von Produkten aus Modusformvektoren und Eigenfrequenzen umfasst;
Berechnen einer ersten Zwischenmatrix aus den zweiten Modaleigenschaften und dem Satz von Bewegungsreaktionen, wobei das Berechnen der ersten Zwischenmatrix das Vormultiplizieren (1) einer Bewegungsreaktionsmatrix, die (i) einen ersten Satz von Verschiebungsvektoren und (ii) einen zweiten Satz von Geschwindigkeitsvektoren umfasst, mit (2) einer inversen zweiten Modaleigenschaftsmatrix umfasst, wobei die zweite Modaleigenschaftsmatrix (i) einen ersten Satz von Modusformvektoren und (ii) einen zweiten Satz von Produkten aus Modusformvektoren und Eigenfrequenzen umfasst, wobei jede Spalte einer resultierenden ersten Zwischenmatrix die erste Zwischenmatrix ist, die einem jeweiligen Zeitschritt zugeordnet ist;
rekursives Berechnen, für jeden Zeitschritt während der Messung der Reaktion, einer zweiten Zwischenmatrix basierend auf (1) den ersten Größen, (2) den zweiten Modaleigenschaften, (3) der ersten Zwischenmatrix und (4) einer zuvor berechneten zweiten Zwischenmatrix von zumindest einem vorherigen Zeitschritt, wobei das rekursive Berechnen der zweiten Zwischenmatrix für einen jeweiligen Zeitschritt Folgendes umfasst:

Multiplizieren der ersten Zwischenmatrix mit zumindest einer aus den erhaltenen ersten Größen;
Dividieren des Ergebnisses der Multiplikation der ersten Zwischenmatrix mit der zumindest einen der erhaltenen ersten Größen durch eine Zeitschrittweite; und
Subtrahieren eines Werts, der auf einer zuvor berechneten zweiten Zwischenmatrix basiert, von zumindest einem vorherigen Zeitschritt gemäß:

$$N_r((i-1)h) = 2(a_r H_r((i-1)h)/h - \sum_{j=1}^{i-2} N_r(jh)e^{(i-1-j)h\lambda_r})$$

für Zeiten t mit i = 2,...,e, wobei e die Anzahl an Zeitschritten ist und wobei $N_r(t)$ die zweite Zwischen-matrixkomponente ist, h die Zeitschrittweite ist, $a_r$ eine erste Größe ist, $H_r(t)$ die erste Zwischenmatrixkom-ponente ist und $\lambda_r$ eine Eigenfrequenz ist und wobei $N_r(0) = 0$ ist; und

Berechnen der Kraft und des Drehmoments für jeden Zeitschritt während der Messung des Satzes von Bewegungsreaktionen basierend auf der zweiten Zwischenmatrix und den zweiten Modaleigenschaften, wobei der Satz von Befehlen zum Berechnen der Kraft und des Drehmoments für jeden Zeitschritt einen Satz von Befehlen zum Vormultiplizieren zumindest einer zweiten Zwischenmatrix für jeden Zeitschritt mit einer Inversen einer Transponierten einer zweiten Modaleigenschaftsmatrix umfasst, wobei die zweite Modaleigenschaftsmatrix (i) einen ersten Satz von Modusformvektoren und (ii) einen zweiten Satz von Produkten aus Modusformvektoren und Eigenfrequenzen umfasst.

6. Nichtflüchtiges, computerlesbares Medium nach Anspruch 5, wobei:

die Materialeigenschaften eines aus (1) einem Satz von Massen und einem Satz von Steifigkeitswerten, die dem physikalischen System zugeordnet sind, oder (2) einem Satz von Massen und einem Satz von Dämpfungswerten, die dem physikalischen System zugeordnet sind, umfassen,
die ersten Modaleigenschaften und die zweiten Modaleigenschaften eine oder mehrere Modusformen und eine oder mehrere Eigenfrequenzen umfassen, die dem physikalischen System zugeordnet sind,
der gemessene Satz von Bewegungsreaktionen zumindest ein Satz aus Verschiebungen, ein Satz von Geschwindigkeiten oder ein Satz von Beschleunigungen ist.

7. Nichtflüchtiges, computerlesbares Medium nach Anspruch 5, wobei das physikalische System ein diskretisiertes System ist, das eine Vielzahl von Knoten umfasst, und jeder Knoten der Vielzahl von Knoten einem Sensor zugeordnet ist, der eine Bewegungsreaktion des Knotens im Satz von Bewegungsantworten misst.

8. Nichtflüchtiges, computerlesbares Medium nach Anspruch 7, wobei die erhaltenen Materialeigenschaften und ersten Modaleigenschaften des physikalischen Systems Materialeigenschaften und erste Modaleigenschaften umfassen, die jedem Knoten im physikalischen System zugeordnet sind.

9. Vorrichtung zum Berechnen einer Kraft und eines Drehm oments in einem Zeitbereich für ein physikalisches System, das einen oder mehrere physikalische Sensoren umfasst, wobei das Gerät Folgendes umfasst:

einen Speicher; und
zumindest einen Prozessor, der mit dem Speicher gekoppelt und ausgelegt ist, ein Verfahren nach Anspruch 1 auszuführen.

10. Gerät nach Anspruch 9, wobei:

die Materialeigenschaften einen Satz von Massen und einen Satz von Steifigkeitswerten, die dem physikalischen System zugeordnet sind, und einen Satz von Massen und einen Satz von Dämpfungswerten, die dem physikalischen System zugeordnet sind, umfassen,
die ersten Modaleigenschaften und die zweiten Modaleigenschaften eine oder mehrere Modusformen und eine oder mehrere Eigenfrequenzen umfassen, die dem physikalischen System zugeordnet sind,
der gemessene Satz von Bewegungsreaktionen zumindest ein Satz aus Verschiebungen, ein Satz von Geschwindigkeiten oder ein Satz von Beschleunigungen ist.

11. Vorrichtung nach Anspruch 9, wobei das physikalische System ein diskretisiertes System ist, das eine Vielzahl von Knoten umfasst, und jeder Knoten der Vielzahl von Knoten einem Sensor zugeordnet ist, der eine Bewegungsreaktion des Knotens im Satz von Bewegungsreaktionen misst, und die erhaltenen Materialeigenschaften und ersten Modaleigenschaften des physikalischen Systems Materialeigenschaften und erste Modaleigenschaften umfassen, die jedem Knoten im physikalischen System zugeordnet sind.

**Revendications**

1. Procédé de calcul de force et de moment dans un système physique pour un domaine temporel comprenant un ou plusieurs capteurs physiques, le procédé comprenant les étapes consistant à :

obtenir (1) des propriétés matérielles et (2) des premières propriétés modales du système physique ;
générer (1) une matrice de propriétés matérielles à partir des propriétés matérielles et (2) des secondes propriétés modales à partir des propriétés modales obtenues, les secondes propriétés modales incluant les premières propriétés modales et les conjugués complexes des premières propriétés modales ;
mesurer, via un ou plusieurs capteurs, un ensemble de réponses de mouvement du système physique ;
obtenir des premières quantités basées sur la base des secondes propriétés modales et de la matrice de propriétés matérielles, dans lequel la matrice de propriétés matérielles comprend un parmi (1) un ensemble de masses et un ensemble de valeurs d'amortissement associées au système physique ou (2) un ensemble de masses et un ensemble de valeurs de rigidité associées au système physique, et dans lequel les premières quantités obtenues sont des quantités sur des composantes diagonales d'une matrice qui résulte de la prémultiplication de la matrice de propriétés matérielles par une seconde matrice de propriétés modales transposée et de la post-multiplication du résultat par la seconde matrice de propriétés modales, la seconde matrice de propriétés modales comprenant (i) un premier ensemble de vecteurs de forme de mode et (ii) un second ensemble de produits de vecteurs de forme de mode et de fréquences naturelles ;

calculer une première matrice intermédiaire à partir des secondes propriétés modales et de l'ensemble de réponses de mouvement, dans lequel le calcul de la première matrice intermédiaire comprend une prémultiplication (1) d'une matrice de réponses de mouvement comprenant (i) un premier ensemble de vecteurs de déplacement et (ii) un second ensemble de vecteurs de vitesse par (2) une seconde matrice de propriétés modales inverse, la seconde matrice de propriétés modales comprenant (i) un premier ensemble de vecteurs de forme de mode et (ii) un second ensemble de produits de vecteurs de forme de mode et de fréquences naturelles, dans lequel chaque colonne d'une première matrice intermédiaire résultante est la première matrice intermédiaire associée à un intervalle de temps particulier ;

calculer manière récursive, pour chaque intervalle de temps pendant la mesure de la réponse, une seconde matrice intermédiaire sur la base (1) des premières quantités, (2) des secondes propriétés modales (3), de la première matrice intermédiaire, et (4) d'une seconde matrice intermédiaire calculée précédemment à partir d'au moins un intervalle de temps précédent, dans lequel le calcul récursif de la seconde matrice intermédiaire pour un intervalle de temps particulier comprend les étapes consistant à :

multiplier la première matrice intermédiaire par au moins une des premières quantités obtenues ;

diviser un résultat de la multiplication de la première matrice intermédiaire par la au moins une des premières quantités obtenues par une taille d'intervalle de temps ; et

soustraire une valeur basée sur une seconde matrice intermédiaire calculée précédemment d'au moins un intervalle de temps précédent selon :

$$N_r((i-1)h) = 2(a_r H_r((i-1)h)/h \quad - \sum_{j=1}^{i-2} N_r(jh)e^{(i-1-j)h\lambda_r})$$

pour des temps t avec i = 2, ... ,e, où e est le nombre d'intervalles de temps, et dans lequel $N_r(t)$ est la composante de seconde matrice intermédiaire, h est la taille d'intervalle de temps, $a_r$ est une première quantité, $H_r(t)$ est la composante de première matrice intermédiaire, et $\lambda_r$ est une fréquence naturelle, et dans lequel $N_r(0) = 0$ ; et,

calculer la force et le moment pour chaque intervalles de temps pendant la mesure de l'ensemble de réponses de mouvement sur la base de la seconde matrice intermédiaire et des secondes propriétés modales, dans lequel le calcul de la force et du moment pour chaque intervalles de temps comprend une pré-multiplication d'au moins une seconde matrice intermédiaire pour chaque intervalles de temps par un inverse d'une transposition d'une seconde matrice de propriétés modales, la seconde matrice de propriétés modales comprenant (i) un premier ensemble de vecteurs de forme de mode et (ii) un second ensemble de produits de vecteurs de forme de mode et de fréquences naturelles.

2. Procédé selon la revendication 1, dans lequel :

les propriétés matérielles comprennent un ensemble de masses et un ensemble de valeurs de rigidité associés au système physique et un ensemble de masses et un ensemble de valeurs d'amortissement associés au système physique,

les premières propriétés modales et les secondes propriétés modales comprennent une ou plusieurs formes de mode et une ou plusieurs fréquences naturelles associées au système physique, et

l'ensemble mesuré de réponses de mouvement est au moins un parmi un ensemble de déplacements, un ensemble de vitesses ou un ensemble d'accélérations.

3. Procédé selon la revendication 1, dans lequel le système physique est un système discrétisé comprenant une pluralité de nœuds et chaque nœud dans la pluralité de nœuds est associé à un capteur qui mesure une réponse de mouvement du nœud dans l'ensemble de réponses de mouvement.

4. Procédé selon la revendication 3, dans lequel les propriétés matérielles et les premières propriétés modales obtenues du système physique comprennent des propriétés matérielles et des premières propriétés modales associées à chaque nœud dans le système physique.

5. Support non transitoire lisible par ordinateur stockant un programme pour le calcul de la force et du moment dans un domaine temporel pour un système physique comprenant un ou plusieurs capteurs physiques pour exécution par au moins un processeur, le programme comprenant des ensembles d'instructions pour :

obtenir (1) des propriétés matérielles et (2) des premières propriétés modales du système physique ;

générer (1) une matrice de propriétés matérielles à partir des propriétés matérielles et (2) des secondes propriétés modales à partir des propriétés modales obtenues, les secondes propriétés modales incluant les premières propriétés modales et les conjugués complexes des premières propriétés modales ;

mesurer, via les un ou plusieurs capteurs physiques, un ensemble de réponses de mouvement du système physique ;

obtenir des premières quantités sur la base des secondes propriétés modales et de la matrice de propriétés matérielles, dans lequel la matrice de propriétés matérielles comprend un parmi (1) un ensemble de masses et un ensemble de valeurs d'amortissement associées au système physique ou (2) un ensemble de masses et un ensemble de valeurs de rigidité associées au système physique, et dans lequel les premières quantités obtenues sont des quantités sur des composantes diagonales d'une matrice qui est le résultat d'une pré-multiplication de la matrice de propriétés matérielles par une seconde matrice de propriétés modales transposée et de la post-multiplication du résultat par la seconde matrice de propriétés modales, la seconde matrice de propriétés modales comprenant (i) un premier ensemble de vecteurs de forme de mode et (ii) un second ensemble de produits de vecteurs de forme de mode et de fréquences naturelles ;

calculer une première matrice intermédiaire à partir des secondes propriétés modales et de l'ensemble de réponses de mouvement, dans lequel l'ensemble d'instructions pour calculer la première matrice intermédiaire comprend un ensemble d'instructions pour pré-multiplier (1) une matrice de réponses de mouvement comprenant (i) un premier ensemble de vecteurs de déplacement et (ii) un second ensemble de vecteurs de vitesse par (2) une seconde matrice de propriétés modales inverse, la seconde matrice de propriétés modales comprenant (i) un premier ensemble de vecteurs de forme de mode et (ii) un second ensemble de produits de vecteurs de forme de mode et de fréquences naturelles, dans lequel chaque colonne d'une première matrice intermédiaire résultante est la première matrice intermédiaire associée à un intervalles de temps particulier ;

calculer de manière récursive, pour chaque intervalles de temps pendant la mesure de la réponse, une seconde matrice intermédiaire sur la base (1) des premières quantités, (2) des secondes propriétés modales, (3) de la première matrice intermédiaire et (4) d'une seconde matrice intermédiaire précédemment calculée à partir d'au moins un intervalle de temps précédent, dans lequel l'ensemble d'instructions pour le calcul récursif de la seconde matrice intermédiaire pour un intervalles de temps particulier comprend des ensembles d'instructions pour :

multiplier la première matrice intermédiaire par au moins une des premières quantités obtenues ;

diviser un résultat de la multiplication de la première matrice intermédiaire par la au moins une des premières quantités obtenues par une taille d'intervalle de temps ; et

soustraire une valeur basée sur une seconde matrice intermédiaire calculée précédemment d'au moins un intervalle de temps précédent selon :

$$N_r((i-1)h) = 2(a_r H_r((i-1)h)/h \ - \ \sum_{j=1}^{i-2} N_r(jh)e^{(i-1-j)h\lambda_r})$$

et

pour des temps t avec i = 2, ... , e, où e est le nombre d'intervalles de temps, et dans lequel $N_r(t)$ est la composante de seconde matrice intermédiaire, h est la taille d'intervalle de temps, $a_r$ est une première quantité, $H_r(t)$ est la composante de première matrice intermédiaire, et $\lambda_r$ est une fréquence naturelle, et dans lequel $N_r(0) = 0$ ; et,

calculer la force et le moment pour chaque intervalles de temps pendant la mesure de l'ensemble de réponses de mouvement sur la base de la seconde matrice intermédiaire et des secondes propriétés modales, dans lequel l'ensemble d'instructions pour calculer la force et le moment pour chaque intervalles de temps comprend un ensemble d'instructions pour pré-multiplier au moins une seconde matrice intermédiaire pour chaque intervalle de temps par un inverse d'une transposition d'une seconde matrice de propriétés modales, la seconde matrice de propriétés modales comprenant (i) un premier ensemble de vecteurs de forme de mode et (ii) un second ensemble de produits de vecteurs de forme de mode et de fréquences naturelles.

6. Support non transitoire lisible par ordinateur selon la revendication 5, dans lequel

les propriétés matérielles comprennent un parmi (1) un ensemble de masses et un ensemble de valeurs de rigidité associées au système physique ou (2) un ensemble de masses et un ensemble de valeurs d'amortissement associées au système physique,

les premières propriétés modales et les secondes propriétés modales comprennent une ou plusieurs formes de mode et une ou plusieurs fréquences naturelles associées au système physique, et

l'ensemble mesuré de réponses de mouvement est au moins un parmi un ensemble de déplacements, un ensemble de vitesses ou un ensemble d'accélérations.

7. Support non transitoire lisible par ordinateur selon la revendication 5, dans lequel le système physique est un système discrétisé comprenant une pluralité de nœuds et chaque nœud dans la pluralité de nœuds est associé à un capteur qui mesure une réponse de mouvement du nœud dans l'ensemble de réponses de mouvement.

8. Support non transitoire lisible par ordinateur selon la revendication 7, dans lequel les propriétés matérielles et les premières propriétés modales obtenues du système physique comprennent des propriétés matérielles et des premières propriétés modales associées à chaque nœud dans le système physique.

9. Appareil de calcul de force et de moment dans un domaine temporel pour un système physique comprenant un ou plusieurs capteurs physiques, l'appareil comprenant :

une mémoire ; et
au moins un processeur couplé à la mémoire et configuré pour exécuter le procédé de la revendication 1.

10. Appareil selon la revendication 9, dans lequel :

les propriétés matérielles comprennent un ensemble de masses et un ensemble de valeurs de rigidité associés au système physique et un ensemble de masses et un ensemble de valeurs d'amortissement associés au système physique,

les premières propriétés modales et les secondes propriétés modales comprennent une ou plusieurs formes de mode et une ou plusieurs fréquences naturelles associées au système physique, et

l'ensemble mesuré de réponses de mouvement est au moins un parmi un ensemble de déplacements, un ensemble de vitesses ou un ensemble d'accélérations.

11. Appareil selon la revendication 9, dans lequel le système physique est un système discrétisé comprenant une pluralité de nœuds, chaque nœud de la pluralité de nœuds est associé à un capteur qui mesure une réponse de mouvement du nœud dans l'ensemble de réponses de mouvement, et les propriétés matérielles et les premières propriétés modales obtenues du système physique comprennent des propriétés matérielles et des premières propriétés modales associées à chaque nœud dans le système physique.

FIG. 1

The system of Interest to
compute $f_1(t)$, $f_2(t)$, $f_3(t)$

$200$

$214$  $f_2(t)$

$212$

$216$  $f_3(t)$

$f_1(t)$

$220$

Plate (N DOF)
$210$

$230$

$250$

$264$  $f_2(t)$

$262$

$266$  $f_3(t)$

$f_1(t)$

$270$

Plate (N DOF)
$260$

$280$

FIG. 2

FIG. 3

obtain material properties and modal properties of the physical system
401

measure a response of the physical system with a set of sensors
403

obtain first quantities based on the modal properties and a material-property matrix derived from the material properties
405

calculating a first intermediate matrix from the modal properties and the response
407

obtain a set of initial values for a second intermediate matrix
409

select a next time step
411

compute a second intermediate matrix for a current time step based on (1) the first quantities, (2) the first intermediate matrix, and (3) a previously computed second intermediate matrix from at least one previous time step
413

last time step?
415

No

Yes

calculate the force and the moment for each time step during the measurement of the response based on the second intermediate matrix and the modal properties
417

FIG. 4

[Step 1] Acquire/Measure the required quantities:
$q_i(t)$, M, K, $\lambda_i$ and $\phi_i$ (i = 1, …, N) **510**

( $q_i$ can be replaced by $\dot{q}_i$ or $\ddot{q}_i$
K can be replaced by C
Initial condition $q_i(0)$ is also required )

[Step 2] Compute $H_r(t)$, $a_r$, and $\lambda_r$ based on Step 1 **520**

< Item 1 >    < Item 2 >    < Item 3 >

| $\lambda_i, \phi_i$ | $q_i(t), \lambda_r, \phi_r$ | M, K, $\phi_r$ |

**522**    **524**    **526**

| $\lambda_r, \phi_r$ | $H_r(t)$ | $a_r$ |

i = 1, …, N
r = 1, …, 2N

[Step 3] Compute $N_r(t)$ from Step 2 ($H_r(t)$, ar and $\lambda_r$)
by recursion algorithm **530**

Time: t = $t_1$, $t_2$, $t_3$, …, $t_e$ = 0,h,2h, …, (e-1)h   **532**

Recursion Algorithm    **534**

$N_r(0) = 0$ (or the initial condition) **536**
$H_r(h)$, $a_r \rightarrow N_r(h)$

$N_r(h)$, $H_r(2h)$, $a_r$, $\lambda_r \rightarrow N_r(2h)$

$N_r(h)$, $N_r(2h)$, $H_r(3h)$, $a_r$, $\lambda_r \rightarrow N_r(3h)$

$N_r(h)$, $N_r(2h)$, $N_r(3h)$, $H_r(4h)$, $a_r$, $\lambda_r \rightarrow N_r(4h)$    **538**

$N_r(h)$, $N_r(2h)$, …, $N_r((e-2)h)$, $H_r((e-1)h)$, $a_r$, $\lambda_r \rightarrow N_r((e-1)h)$

[Step 4] Compute the force $f(t)$ and the moment $\tau(t)$ from
Step 2($\lambda_r$ and $\phi_r$) and Step 3 ($N_r(t)$) **540**

| $N_r(t), \lambda_r, \phi_r$ | → | $f(t), \tau(t)$ |

**542**

**FIG. 5**

[System Property Measurement Means] Measure the system properties in advance; M, K (or C), $\lambda_i$ and $\phi_i$ **610**

K can be replaced by C
$q_i(t)$ can be replaced by $\dot{q}_i(t)$ or $\ddot{q}_i(t)$
Initial condition $q_i(0)$ is also required

[Motion Measurement Means] Measure the displacements with time at the discretized points (nodes: $q_i(t)$ ($\dot{q}_i(t)$ or $\ddot{q}_i(t)$)) **620**

**612**
M, K, $\lambda_i$, $\phi_i$

**622**
$q_i(t)$

[Second Computation Means] Compute $N_r(t)$ by recursion algorithm **640**

$N_r(0) = 0$ (or the initial condition)
$H_r(h), a_r \rightarrow N_r(h)$

$N_r(h), H_r(2h), a_r, \lambda_r \rightarrow N_r(2h)$

$N_r(h), N_r(2h), H_r(3h), a_r, \lambda_r \rightarrow N_r(3h)$

$N_r(h), N_r(2h), N_r(3h), H_r(4h), a_r, \lambda_r \rightarrow N_r(4h)$

$\vdots$

$N_r(h), N_r(2h), ..., N_r((e-2)h), H_r((e-1)h), a_r, \lambda_r \rightarrow N_r((e-1)h)$

**642**
$N_r(t)$ (t = 0, h, 2h, ..., (e-1)h)

[Computation Part 1] Compute $H_r(t)$, $a_r$ and $\lambda_r$

< Item 1 >
$\lambda_i, \phi_i$

< Item 2 >
**634**
$q_i(t), \lambda_r, \phi_r \rightarrow H_r(t)$

$q_i(t)$

**632**
$\lambda_r, \phi_r$

< Item 3 >
M, K

**636**
M, K, $\phi_r \rightarrow a_r$

**630**

$H_r(t), a_r, \lambda_r$

$\lambda_r, \phi_r$

[Third Computation Means] Compute the force $f(t)$ and the moment $\tau(t)$

**652**
$N_r(t), \lambda_r, \phi_r \rightarrow f(t), \tau(t)$

**650**

i = 1, ..., N
r = 1, ..., 2N
t = $t_1, t_2, t_3, ..., t_e$
  = 0,h,2h, ..., (e-1)h

FIG. 6

$$t_{(1)} = [t_1, t_2 \ldots, t_e] \qquad t_{(2)} \qquad \ldots \ldots \qquad t_{(k)} = [t_1, t_2 \ldots, t_e]$$

$$= [0, h, \ldots, (e-1)h] \qquad \ldots \ldots \quad = [k(e-1)h, (ke-(k-1))h, \ldots, k(e-1)h]$$

$$\boldsymbol{q}_{(1)}(t) = \left(q_1(t), q_2(t), \ldots, q_N(t)\right)^T \qquad \boldsymbol{q}_{(2)}(t) \qquad \ldots \ldots \qquad \boldsymbol{q}_{(k)}(t) = \left(q_1(t), q_2(t), \ldots, q_N(t)\right)^T$$

$$q_1(t) = (x, y, z, \theta_x, \theta_y, \theta_z)$$

$$\boldsymbol{f}_{(1)}(t) = \left(f_1(t), f_2(t), f_3(t), 0, 0, 0\right)^T \quad \boldsymbol{f}_{(2)}(t) \qquad \ldots \ldots \quad \boldsymbol{f}_{(k)}(t) = \left(f_1(t), f_2(t), f_3(t), 0, 0, 0\right)^T$$

FIG. 7

FIG. 8

**REFERENCES CITED IN THE DESCRIPTION**

**Non-patent literature cited in the description**

- **SIEMENS**. *Transfer path analysis Qualifying and quantifying vibro-acoustic transfer paths*, 01 September 2018